# EUROPÄISCHE PATENTSCHRIFT

(11) **EP 1 293 538 B1**
(45) Veröffentlichungstag und Bekanntmachung des Hinweises auf die Patenterteilung: **29.03.2006**
(21) Anmeldenummer: 02017759.8
(22) Anmeldetag: 09.08.2002
(51) Int. Cl.: C09B 23/14

(54) **Verfahren zur Herstellung von Styrylfarbstoffen**
Process for the preparation of styryl dyes
Procédé de préparation de colorants styryliques

(30) Priorität: 21.08.2001 DE 10140860
(43) Veröffentlichungstag der Anmeldung: 19.03.2003
(73) Patentinhaber: LANXESS Deutschland GmbH, 51369 Leverkusen (DE)
(72) Erfinder: Stawitz, Josef-Walter, Dr., 51519 Odenthal (DE); Michaelis, Stephan, Dr., 51519 Odenthal (DE); Thiebes, Christoph, Dr., 50670 Köln (DE)

(56) Entgegenhaltungen:
- CH-A- 569 055
- US-A- 3 787 476

## Beschreibung

Die Erfindung betrifft ein Verfahren zur Herstellung von Styrylfarbstoffen.

Gemäß CH-A-56 9055 sind Styrylfarbstoffe bereits zum Färben von Polyesterfasern aber auch zum Massefärben spezieller Kunststoffe beschrieben.

Die Herstellung dieser Farbstoffe nach dem Verfahren gemäß CH-A-56 9055 ist aufwendig. Um nämlich technisch überhaupt eingesetzt werden zu können, müssen sie durch Umkristallisation gereinigt werden.

Es hat sich insbesondere bei den Verbindungen der Beispiele 9 und 10 aus CH-A-56 9055 gezeigt, dass ohne Reinigung oder Umkristallisation die nach dem Verfahren erhaltenen Verbindungen sich beim Lagern verändern und stumpf und unansehnlich werden.

So werden die nicht umkristallisierten Farbstoffe schon beim Stehen bei 25°C innerhalb von 24 Monaten rotstichig und stumpf. Bei Temperaturen von >50°C wie sie in tropischen Gebieten möglich sind oder in manchen Lagerräumen vorherrschen, verändern sich die Farbstoffe wesentlich rascher. Die Zersetzung der nicht umkristallisierten Farbstoffe wird auch durch Anwesenheit von Polyglykolen, deren Zusatz bei der Verwendung als Granulate vorteilhaft ist, weiter verstärkt.

Aufgabe der Erfindung ist es daher, ein Verfahren zur Herstellung von Styrylfarbstoffen bereitzustellen, das die Nachteile des Standes der Technik nicht mehr aufweist, insbesondere lagerstabilere Verbindungen liefert.

Es wurde nun ein Verfahren zur Herstellung von Verbindungen der Formel (I) gefunden 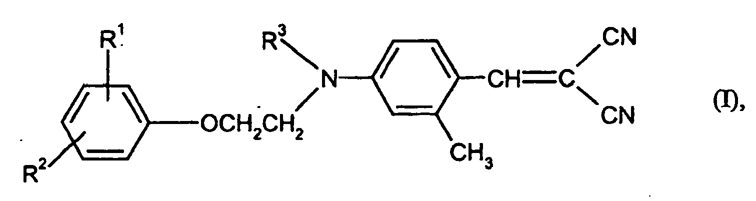 worin
R¹, R² und R³ unabhängig voneinander für Wasserstoff, Alkyl oder Cycloalkyl stehen, das dadurch gekennzeichnet ist, dass man einen Aldehyd der Formel (II) 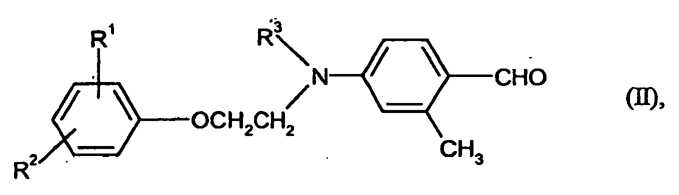 worin
R¹, R² und R³ die oben angegebenen Bedeutungen haben, mit CH₂(CN)₂ der Formel (III) in Gegenwart von Butanol, insbesondere n-Butanol, umsetzt.

Im Rahmen dieser Anmeldung wird unter Alkyl im Sinne der Bedeutung der Reste R¹ bis R³ vorzugsweise C₁-C₁₂-Alkyl, besonders bevorzugt C₁-C₆-Alkyl, insbesondere Methyl, Ethyl, n-Propyl, n-Butyl, n-Pentyl, n-Hexyl, n-Dodecyl, n-Octyl und n-Nonyl, aber auch die entsprechenden verzweigten Alkylreste verstanden.

Unter Cycloalkyl wird bevorzugt C₅-C₇-Cycloalkyl, insbesondere Cyclopentyl, Cyclohexyl und Cycloheptyl, insbesondere Cyclohexyl verstanden. Sowohl Alkyl- als auch Cycloalkylreste können substituiert sein. Als beispielhafte Substituenten sind zu nennen: Alkyl, Alkoxy, Halogen, insbesondere Fluor, Chlor oder Cyano, Alkylmercapto, Aryl sowie Arylmercapto.

Bevorzugt sind sie aber unsubstituiert.

Bevorzugt werden nach dem erfindungsgemäßen Verfahren Verbindungen der Formel (I) hergestellt, worin
R¹, R² unabhängig voneinander für Wasserstoff, für Cycloalkyl, insbesondere für C₅₋C₇-Cycloalkyl, besonders bevorzugt für Cyclohexyl steht,
R³ C₁-C₆-Alkyl, insbesondere Ethyl bedeutet.

Besonders bevorzugt sind Verbindungen der Formel (I), die der Formel (Ia) entsprechen 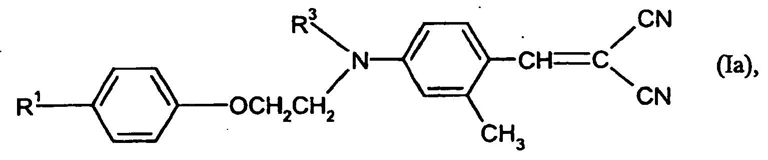 worin
R¹, R² und R³ die oben angegebene Bedeutung besitzen. Ganz besonders bevorzugt solche, die den Formeln (Ib) oder (Ic) entsprechen

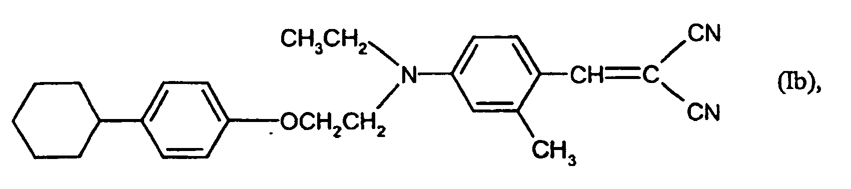

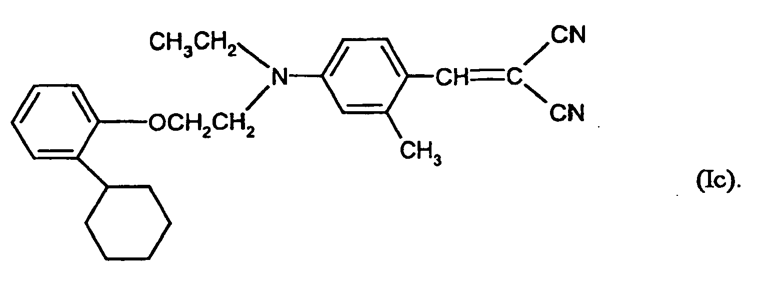

Die Umsetzung erfolgt in Butanol, worunter n-Butanol, 2-Butanol oder Isobutanol verstanden wird, insbesondere in einem n-Butanol-haltigem Lösungsmittel. Der Anteil an n-Butanol an der Gesamtmenge Lösungsmittel beträgt vorzugsweise mehr als 50 Gew.%.

In einer bevorzugten Ausführungsform des erfindungsgemäßen Verfahrens wird nach der Vilsmeier-Reaktion DMF und das Neutralisationswasser abgetrennt und nach Verdünnen des Aldehyds mit n-Butanol ein Lösungsmittelgemisch aus >95 Gew.% Butanol und <5 Gew.% Wasser erstellt.

In einer ebenfalls bevorzugten Ausführungsform des erfindungsgemäßen Verfahrens, erfolgt nach der Vilsmeier-Reaktion keine Abtrennung von DMF und Neutralisationswasser, wodurch ein Lösungsmittelgemisch entsteht, enthaltend 50 bis 70 Gew.-% n-Butanol, 15 bis 25 Gew.-% DMF und 15 bis 25 Gew.-% Wasser. Besonders bevorzugt ist es, wenn das Gewichts-Verhältnis von DMF zu Wasser 0,9 bis 1,1, insbesondere ca. 1 beträgt.

Die Reaktion kann in Gegenwart von Katalysatoren, insbesondere basischen Katalysatoren, beispielsweise Piperidin sowie Triethylamin, als auch sauren Katalysatoren wie Eisessig sowie p-Toluolsulfonsäuren und in Gegenwart von Puffern wie Natriumacetat/Essigsäure durchgeführt werden.

Die Reaktion läuft vorzugsweise bei einer Temperatur von 40 bis 100°C, insbesondere bei 60 bis 80°C ab.

Die Edukte II und III werden vorzugsweise in einem molaren Verhältnis von 0,8 bis 1,1, insbesondere von 0,95 bis 1,05 eingesetzt.

Nach Beendigung der Reaktion werden die Reaktionsmischungen im Allgemeinen auf Raumtemperatur abgekühlt und die Verbindungen der Formel (I) durch Abfiltrieren und Waschen mit Alkohol und Wasser isoliert.

Der Aldehyd der Formel (II) wird beispielsweise so hergestellt, dass man eine aromatische Verbindung der Formel (IV) 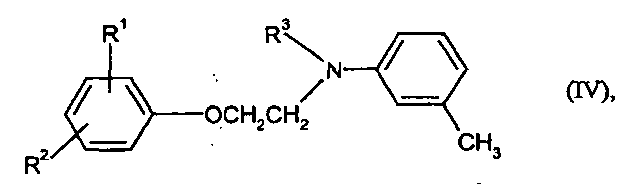 worin
R¹ bis R³ die oben angegebene Bedeutung haben, vorzugsweise nach Vilsmeier-Haack, formyliert.

Bei der Vilsmeier-Haack-Reaktion erfolgt die Umsetzung von (IV) mit Phosphoroxychlorid (POCl₃) und DMF gegebenenfalls in einem davon verschiedenen Lösungsmittel.

Bevorzugt beträgt das molare Verhältnis von DMF zu Phosphoroxychlorid 1 bis 5, insbesondere 2 bis 3.

Als Lösungsmittel fungiert in der Regel DMF aber auch davon verschiedene wie Chlorbenzol, Dichlorbenzole, Dioxan sowie NMP können eingesetzt werden.

Die Formylierung wird vorzugsweise bei einer Temperatur von 30 bis 70°C, insbesondere von 40 bis 60°C durchgeführt.

In einer ganz besonders bevorzugten Ausführungsform des erfindungsgemäßen Verfahrens wird der Aldehyd der Formel (II) nach der Formylierung der aromatischen Verbindung (IV) ohne Zwischenisolierung eingesetzt.

Bevorzugt wird der Aldehyd also in Form seiner Reaktionsmischung eingesetzt, wie sie nach der Formylierung der Verbindung der Formel (IV) erhalten wird.

Die Aufarbeitung der Vilsmeier Reaktionsmischung und Kondensation mit Malodinitril erfolgt vorzugsweise so, dass man entweder:
- die Reaktionsmischung nach beendeter Reaktion in vorgelegtes Wasser eingießt, einen pH-Wert: >7 einstellt, Phasentrennung vornimmt und die organische Phase (Aldehyd) mit Butanol, insbesondere n-Butanol verdünnt und nach Zugabe von Malodinitril die Kondensation durchführt, vorzugsweise bei einer Temperatur von 60 bis 80°C oder
- die Reaktionsmischung nach beendeter Reaktion in vorgelegtes Butanol, insbesondere n-Butanol, eingießt, den pH-Wert auf >7, vorzugsweise auf 8 bis 9, einstellt und nach Zugabe von Malodinitril die Kondensation durchführt, vorzugsweise bei einer Temperatur von 60 bis 80°C, oder
- die Reaktionsmischung nach beendeter Reaktion mit Butanol, insbesondere n-Butanol, verdünnt, einen pH-Wert von >7, insbesondere 8 bis 9, einstellt und nach Zugabe von Malodinitril die Kondensation durchführt, insbesondere bei einer Temperatur von 60 bis 80°C.

Die aromatische Verbindung der Formel (IV) kann beispielsweise durch Kondensation von Phenolen der Formel (V) 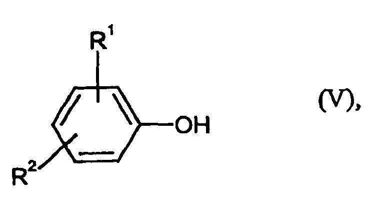 mit β-Cbloroethylaminen der Formel (VI) 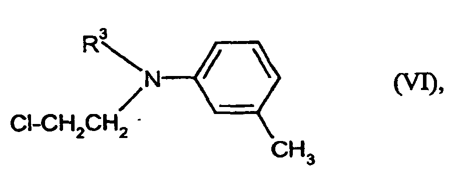 worin jeweils.

R¹ bis R³ die oben angegebene Bedeutung haben, in Gegenwart einer Base hergestellt werden.

Als Basen werden beispielsweise die Hydroxide, Oxide oder Carbonate der Alkali- und Erdalkali-Reihe verwendet, besonders bevorzugt sind NaOH, KOH, sowie Na₂CO₃, insbesondere NaOH zu nennen.

Bevorzugt kommt für diese Reaktion Wasser als Reaktionsmedium in Frage, das gegebenenfalls zusammen mit organischen Lösungsmitteln vergesellschaftet sein kann. Als organische Lösungsmittel kommen beispielsweise die nachfolgenden in Frage: N-Methylpyrrolidon, Dimethylformamid oder Dioxan.

Die Menge an Base beträgt vorzugsweise 0,95 bis 1,2 Mol-Äquivalente bezogen auf ß-Chloroethylamin der Formel (VI).

Die Umsetzung erfolgt vorzugsweise bei einer Temperatur von 90 bis 110°C, insbesondere 100 bis 105°C.

Die Aufarbeitung erfolgt vorzugsweise so, dass man die Reaktionsmischung abkühlt, vorzugsweise auf Temperaturen unterhalb von 85°C, eine Phasentrennung vornimmt, die organische Phase mit Dimethylformamid verdünnt und durch Zugabe von Phosphoroxychlorid, vorzugsweise durch Zutropfen, die Formylierung durchführt.

In einer besonders bevorzugten Ausführungsform des erfindungsgemäßen Verfahrens wird der Aldehyd der Formel (II) nach der Formylierung der Verbindung (IV) ohne Zwischenisolierung eingesetzt, und die aromatische Verbindung der Formel (IV) wiederum nach ihrer Herstellung durch Kondensation der Verbindungen (V) und (VI) ohne Zwischenisolierung eingesetzt.

Dieses besonders bevorzugte Verfahren entspricht demnach einem 3-stufigen Verfahren ohne Zwischenisolierung der einzelnen Stufen.

Die nach dem erfindungsgemäßen Verfahren in hoher Ausbeute erhaltenen Styrylfarbstoffe färben mit klarer Nuance und sind lagerstabil, sowohl als Pulver, Granulat als auch als wässrige Suspension.

Die nach dem erfindungsgemäßen Verfahren hergestellten Farbstoffe eignen sich besonders zum Färben von Polyesterfasern aus wässriger Flotte sowie zum Massefärben von Kunststoffen.

Unter Massefärben werden hierbei insbesondere Verfahren verstanden, bei denen der Farbstoff in die geschmolzene Kunststoffmasse eingearbeitet wird, z.B. unter Zuhilfenahme eines Extruders, oder bei denen der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester, Polyamide sowie Polyolefine, insbesondere Polyethylen und Polypropylen oder Polycarbonate.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylat, Polyvinylchlorid u.a.

Weiterhin geeignet sind Polyester wie beispielsweise Polyethylenterephthalate, Polycarbonate und Celluloseester.

Besonders bevorzugt sind Polystyrol, Styrol-Mischpolymere, Polycarbonate und Polymethacrylate.

Die erwähnten hochmolekularen Verbindungen können einzeln oder in Gemischen, als plastische Massen oder Schmelzen vorliegen.

Die nach dem erfindungsgemäßen Verfahren erhaltenen Farbstoffe werden vorzugsweise in feinverteilter Form zur Anwendung gebracht, wobei Dispergiermittel mitverwendet werden können aber nicht müssen.

Wird die Farbstoffmischung nach der Polymerisation eingesetzt, so wird sie vorzugsweise mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguss-Verfahren zu Formteilen weiterverarbeitet.

Da die Farbstoffe gegenüber Polymerisationskatalysatoren insbesondere Peroxiden, beständig sind, ist es auch möglich, den Farbstoff den monomeren Ausgangsmaterialien für die Kunststoffe zuzusetzen und dann in Gegenwart von Polymerisationskatalysatoren zu polymerisieren. Dazu wird der Farbstoff vorzugsweise in den monomeren Komponenten gelöst oder mit ihnen innig vermischt.

Die nach dem erfindungsgemäßen Verfahren erhaltenen Farbstoffe werden vorzugsweise zum Färben der genannten Polymeren in Mengen von 0,0001 bis 1 Gew.%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.%, bezogen auf die Polymermenge, verwendet werden.

Nach dem oben beschriebenen Färbe-Verfahren erhält man transparente bzw. gedeckte brillante gelbe Färbungen mit guter Hitzebeständigkeit sowie guter Licht-, Wetter- und Sublimierechtheit.

In das oben beschriebene Färbe-Verfahren können auch Mischungen der Farbstoffe der Formel (I) mit anderen Farbstoffen und/oder anorganischen bzw. organischen Pigmenten eingesetzt werden.

Die nach dem erfindungsgemäßen Verfahren hergestellten Farbstoffe eignen sich ebenfalls hervorragend zum Färben von hydrophoben Fasern oder Textilien aus wässrigem Bad.

Vorzugsweise im Ausziehverfahren werden sie als wässrige Dispersion in Gegenwart von Carriern bei ca. 100°C oder ohne Carriern bei einer Temperatur von 120 bis 150°C zum Färben eingesetzt. Sie eignen sich insbesondere zum Färben von Fasern und Textilien aus Polyester wie beispielsweise Polyethylenterephthalat, Polycarbonaten sowie Celluloseestern, insbesondere zum Färben von Polyester/Wolle oder Polyester/Cellulose-Mischgewebe.

Die Erfindung wird erläutert, jedoch nicht beschränkt durch die folgenden Beispiele, in denen die Teile gewichtsmäßig angegeben sind, Prozentangaben Gewichtsprozente (Gew.-%) bedeuten.

### Beispiele

### Beispiel 1

In 400 Teilen n-Butanol werden bei 60 bis 70°C 300 Teile (= 822 mmol) Aldehyd der Formel 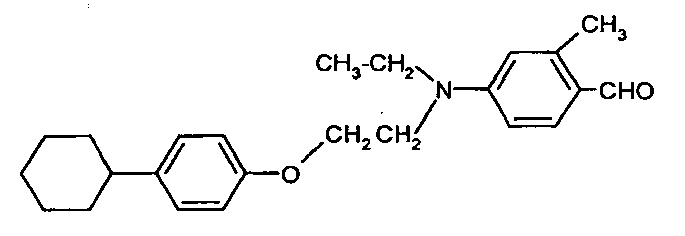 gelöst. Man stellt mit verdünnter Natronlauge auf pH 8,5 und lässt unter Rühren 55,6 Teile (= 842 mmol) geschmolzenes Malodinitril zulaufen. Man heizt auf 60 bis 70°C auf, hält 5 Stunden bei 60 bis 70°C, kühlt auf 20 bis 25°C ab und saugt ab. Der Nutschkuchen wird nacheinander mit wenig Butanol und Methanol, dann mit 11 warmem Wasser gewaschen und im Vakuum bei 80°C getrocknet. Man erhält 289,2 g eines orangeroten kristallinen Pulvers vom Schmelzpunkt 115 bis 116°C, das sind 85,2 % der Theorie.

Das Produkt entspricht der Formel

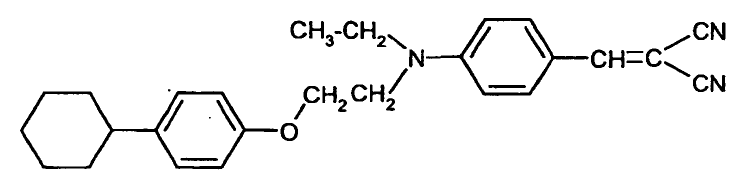

Es färbt Polystyrol in der Masse in einem klaren, grünstichigen Gelb und ist lagerstabil.

### Beispiel 2

Man verfährt wie in Beispiel 1, setzt aber 325,0 Teile (=822 mmol) des Aldehyds der Formel 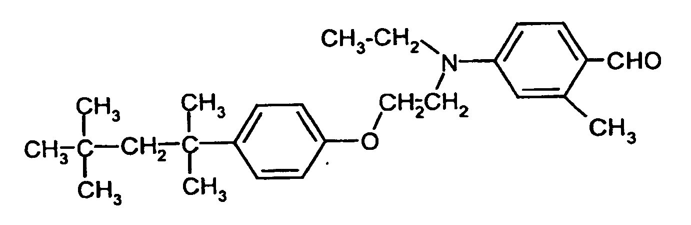 in 1200 Teile n-Butanol ein.

Man erhält 309,5 Teile eines orangegelben kristallinen Pulvers vom Schmelzpunkt 151 bis 153°C, das sind 85 % der Theorie.

Das Produkt entspricht der Formel

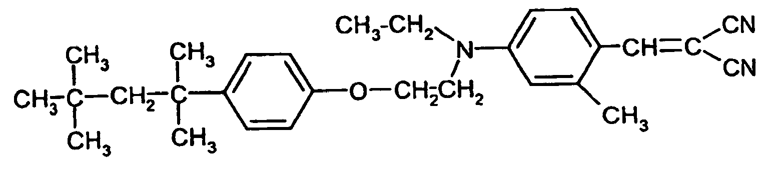

Er färbt Polystyrol in der Masse ca. 5 % schwächer, etwas grüner, etwas stumpfer als das Produkt des Beispiels 1 und ist lagerstabil.

### Beispiel 3

Eine Mischung aus 165,2 Teilen N-(2-Chlorethyl)-N-ethyl-3-methylanilin und 151,5 Teilen 4-Cyclohexylphenol in 160 Teilen Wasser heizt man auf ca. 40°C und lässt 72 Teile 50 %ige Natronlauge unter kräftigem Rühren zulaufen. Man heizt zum Rückfluss (ca. 105°C) und hält ca. 10 Stunden bei Rückfluss.

Nach Abkühlen auf 85°C lässt man durch Stillsetzen des Rührers die Phasen separieren, trennt die wässrige Phase ab und entwässert die organische Phase im Vakuum bei 120°C.

Die wasserfreie organische Phase wird mit 183 Teilen Dimethylformamid verdünnt und auf ca. 50°C gekühlt. Dann lässt man bei 45 bis 50°C innerhalb von ca. 4 Stunden 150 Teile Phosphoroxychlorid zutropfen und hält dann noch 5 Stunden bei 65 bis 70°C.

Anschließend wird die Mischung auf ca. 40°C gekühlt und dann innerhalb von ca. 1 Stunde in 420 Teile gekühltes Eiswasser so eingegossen, dass eine Temperatur von 60°C nicht überschritten wird. Der pH wird mit ca. 320 Teilen 50 %iger Natronlauge auf pH 7,5 bis 8,5 gestellt und die Mischung 1 Stunde bei 70°C nachgerührt. Dann wird nach Stillsetzen des Rührers die wässrige Phase abgetrennt und die organische Phase mit 400 Teilen n-Butanol verdünnt

Nach Zusatz von 56 Teilen Malodinitril rührt man 5 Stunden bei ca. 70°C, lässt dann auf 20 bis 25°C abkühlen, saugt ab, wäscht den Nutschkuchen mit wenig Butanol, wenig Methanol und ausgiebig mit Wasser.

Nach Trocknen im Vakuum bei 80°C erhält man 281,4 Teile eines orangeroten kristallinen Pulvers vom Schmelzpunkt 115 bis 116°C, das sind 81,5 % der Theorie, bezogen auf N-(ß-Chlorethyl)-N-ethyl-3-methylanilin.

Der Farbstoff entspricht in allen Eigenschaften (Farbstärke, Nuance, Lagerstabilität) denen des Beispiels 1.

### Beispiel 4

Eine Mischung aus 165,2 Teilen N-(2-Chlorethyl)-N-ethyl-3-methylanilin und 180,9 Teilen 4-(1,1,3,3-Tetramethylbutyl)-phenol in 140 Teilen Wasser heizt man auf 70°C und lässt 73 Teile 50 %ige Natronlauge unter kräftigem Rühren zulaufen. Man heizt zum Rückfluss und hält ca. 10 Stunden bei Rückfluss.

Nach Abkühlen auf 85°C lässt man durch Stillsetzen des Rührers die Phasen separieren, trennt die wässrige Phase ab und entwässert die organische Phase im Vakuum bei 120°C.

Die wasserfreie organische Phase wird mit 185 Teilen Dimethylformamid verdünnt und auf 50°C gekühlt Dann lässt man bei 45 bis 50°C innerhalb von ca. 4 Stunden 150 Teile Phosphoroxychlorid zutropfen, hält dann noch 5 Stunden bei 65 bis 70°C und kühlt auf ca. 45°C. Unter leichtem Kühlen: und gutem Rühren lässt man innerhalb von 1 Stunde bei 40 bis 50°C 1200 Teile n-Butanol zulaufen und stellt anschließend auf den pH 8 durch Zutropfen von 300 Teilen 50 %iger Natronlauge. In den warmen Ansatz gibt man 56 Teile Malodinitril, rührt 5 Stunden bei 65 bis 70°C, kühlt auf 20 bis 25°C und saugt ab. Der Nutschkuchen wird mit wenig Butanol, wenig Methanol und dann gut mit warmem Wasser gewaschen.

Nach Trocknen im Vakuum bei 80°C erhält man 303,6 Teile eines gelborangen kristallinen Produkts vom Schmelzpunkt 152 bis 153°C, das sind 82 % der Theorie, bezogen auf N-(β-Chlorethyl)-N-ethyl-3-methylanilin.

Der Farbstoff entspricht in den Eigenschaften (Farbstärke, Nuance, Lagerstabilität) denen des Beispiels 2.

### Beispiel 5 Vergleichsbeispiel

Setzt man im Beispiel 1 anstelle von Butanol entsprechende Mengen Methanol analog Beispiel 1 aus CH-A-569055 ein, so erhält man einen Farbstoff vom Schmelzpunkt 114 bis 116°C, der nur wenig stumpfer als der des Beispiels 1 färbt, aber nicht lagerstabil ist. Innerhalb ca. 18 Monaten Lagerung bei Raumtemperatur oder etwas erhöhter Temperatur wird das zunächst orangerote Pulver braun und liefert nur noch unanschaulich stumpfe rotstichige Färbungen.

## Patentansprüche

1. Verfahren zur Herstellung von Verbindungen der Formel (I) 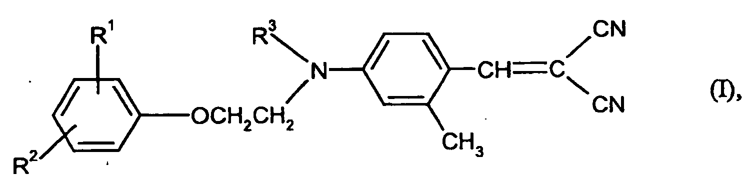 worin
R¹, R² und R³ unabhängig voneinander für Wasserstoff, Alkyl oder Cycloalkyl , die substituiert sein können, stehen, **dadurch gekennzeichnet, dass** man einen Aldehyd der Formel (II) 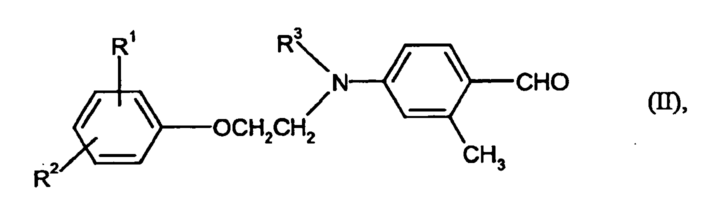
mit CH₂(CN)₂ in Gegenwart von Butanol umsetzt.

2. Verfahren gemäß Anspruch 1, **dadurch gekennzeichnet, dass**
R¹ für Cycloalkyl,
R² Wasserstoff bedeutet und
R³ für C₁-C₆-Alkyl, steht.

3. Verfahren gemäß Anspruch 1, wobei der Aldehyd der Formel (II) nach der Formylierung der aromatischen Verbindung (IV) ohne Zwischenisolierung eingesetzt wird und die Formylierung **dadurch gekennzeichnet ist, dass** man eine aromatische Verbindung der Formel (IV) 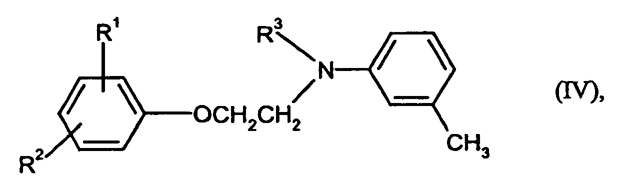 worin
R¹ bis R³ die in Anspruch 1 angegebene Bedeutung haben, formyliert.

4. Verfahren gemäß Anspruch 3, wobei die aromatische Verbindung der Formel (IV) nach ihrer Herstellung durch Kondensation der Verbindungen (V) und (VI) ohne Zwischenisolierung eingesetzt wird, und die Kondensation **dadurch gekennzeichnet ist, dass** man Phenole der Formel (V) 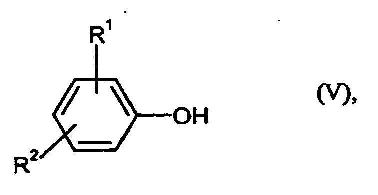 mit β-Chloroethylaminen der Formel (VI) 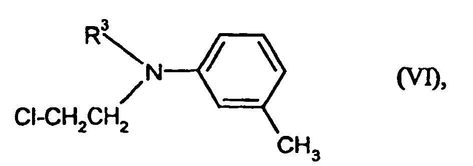 worin jeweils
R¹ bis R³ die in Anspruch 1 angegebene Bedeutung besitzen, in Gegenwart einer Base kondensiert.

## Revendications

1. Procédé pour la préparation de composés de formule (I) 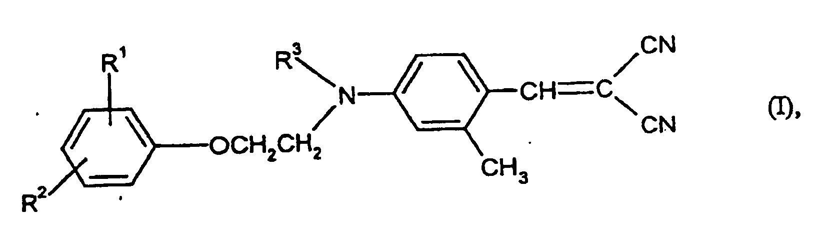 dans laquelle
R¹, R² et R³ représentent chacun indépendamment un atome d'hydrogène, un groupe alkyle ou cycloalkyle qui peuvent être substitués, **caractérisé en ce qu'**on fait réagir un aldéhyde de formule (II) 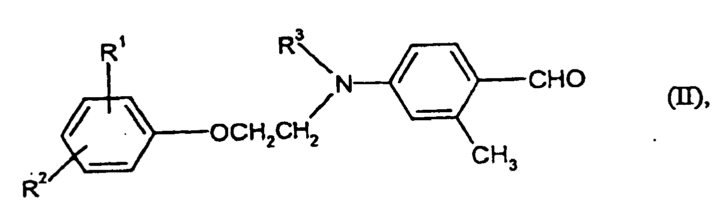 avec du CH₂(CN)₂ en présence de butanol.

2. Procédé selon la revendication 1, **caractérisé en ce que**
R¹ représente un groupe cycloalkyle,
R² représente un atome d'hydrogène, et
R³ représente un groupe alkyle en C₁-C₆.

3. Procédé selon la revendication 1, dans lequel l'aldéhyde de formule (II) est utilisé sans isolement intermédiaire après la formylation du composé aromatique (IV) et la formylation est **caractérisée en ce qu'**on soumet à une formylation un composé aromatique de formule (IV) 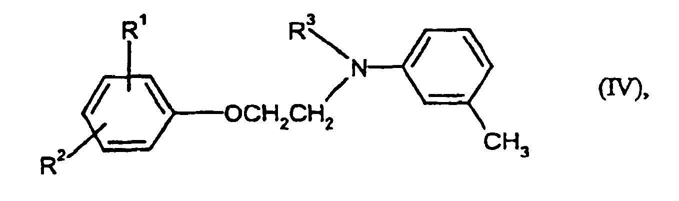 dans laquelle
R¹ et R³ ont les significations indiquées dans la revendication 1.

4. Procédé selon la revendication 3, dans lequel le composé aromatique de formule (IV), après sa préparation par condensation des composés (V) et (VI), est utilisé sans isolement intermédiaire, et la condensation est **caractérisée en ce qu'**on condense des phénols de formule (V) 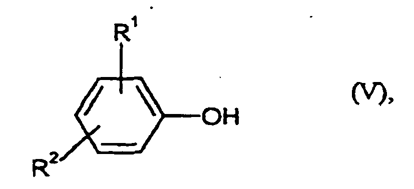 avec des β-chloréthylamines de formule (VI) 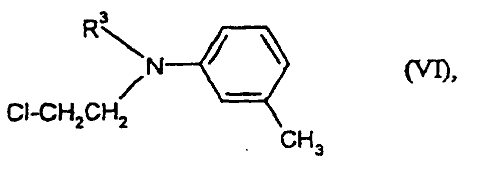 où
R¹ à R³ ont chacun la signification indiquée dans la revendication 1, en présence d'une base.

## Claims

1. Process for preparing compounds of the formula (I) 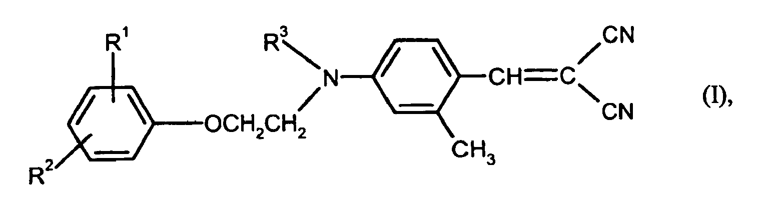 where
R¹, R² and R³ are independently hydrogen, alkyl or cycloalkyl, which may each be substituted, **characterized in that** an aldehyde of the formula (II)

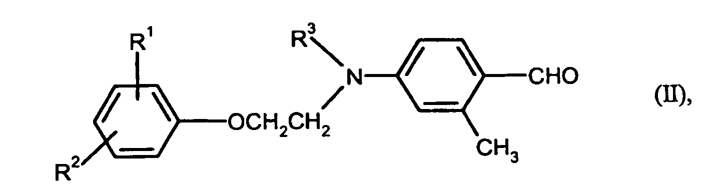

2. Process according to Claim 1, **characterized in that**
R¹ is cycloalkyl,
R² is hydrogen, and
R³ is C₁-C₆-alkyl.

3. Process according to Claim 1 wherein the aldehyde of the formula (II) is used without intervening isolation after the formylation of the aromatic compound (IV) and the formylation is **characterized in that** an aromatic compound of the formula (IV) 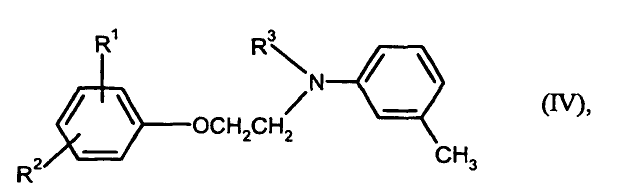 where
R¹ to R³ are each as defined in Claim 1, is formylated.

4. Process according to Claim 3 wherein the aromatic compound of the formula (IV) is used without intervening isolation after its preparation by condensation of the compounds (V) and (VI) and the condensation is **characterized in that** phenols of the formula (V) 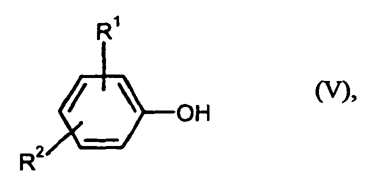 are condensed with β-chloroethylamines of the formula (VI) 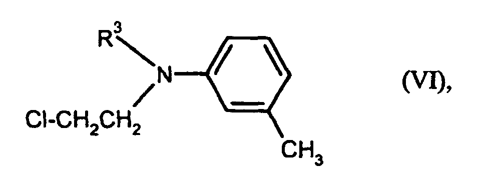 where in either case
R¹ to R³ are each as defined in Claim 1, in the presence of a base.
